(19) Europäisches Patentamt
European Patent Office
Office européen des brevets

(11) **EP 1 895 361 A1**

(12) **EUROPEAN PATENT APPLICATION**
published in accordance with Art. 153(4) EPC

(43) Date of publication:
**05.03.2008 Bulletin 2008/10**

(51) Int Cl.:
**G03B 21/14** *(2006.01)*

(21) Application number: **06767015.8**

(22) Date of filing: **20.06.2006**

(86) International application number:
**PCT/JP2006/312356**

(87) International publication number:
**WO 2006/137416 (28.12.2006 Gazette 2006/52)**

(84) Designated Contracting States:
**DE FR GB**

(30) Priority: **21.06.2005 JP 2005181165**

(71) Applicant: **Sony Corporation**
**Minato-ku**
**Tokyo 108-0075 (JP)**

(72) Inventors:
- **KATSURAGAWA, Hideki,**
  **c/o SONY CORPORATION**
  **Tokyo 108-0075 (JP)**
- **OKAMOTO, Daisuke,**
  **c/o SONY CORPORATION**
  **Tokyo 108-0075 (JP)**
- **NAKANO, Mokuyoh,**
  **c/o SONY CORPORATION**
  **Tokyo 108-0075 (JP)**

- **SHIMIZU, Masayuki,**
  **c/o SONY CORPORATION**
  **Tokyo 108-0075 (JP)**
- **SUNAGA, Toshihiro,**
  **c/o SONY CORPORATION**
  **Tokyo 108-0075 (JP)**
- **OHSHIO, Satoru,**
  **c/o SONY CORPORATION**
  **Tokyo 108-0075 (JP)**
- **KAWAMURA, Yuusuke,**
  **c/o SONY CORPORATION**
  **Tokyo 108-0075 (JP)**

(74) Representative: **Müller - Hoffmann & Partner**
**Patentanwälte**
**Innere Wiener Straße 17**
**D-81667 München (DE)**

(54) **PROJECTION TYPE DISPLAY UNIT**

(57)     A projection type display system able to suppress an increase of a outer size of a set, able to improve the contrast, and excellent in silence, having light modulating units 122 (R, G, B) for modulating incident illumination lights based on input image information and emitting the result, an illumination optical system 109 for making illumination lights from a light source 101 strike light modulating units, and a projection optical system 125 for projecting the illumination lights emitted from the light modulating units, wherein a variable opening aperture system 200 is arranged in the vicinity of a pupil position of the projection optical system 125, and the aperture system 200 is arranged so as to match contrast characteristics of the light modulating units and an aperture shape at the time of opening/closing the aperture.

FIG. 1

**Description**

TECHNICAL FIELD

The present invention relates to a liquid crystal projector or other projection type display system for example.

BACKGROUND ART

A liquid crystal projector is a projector system using a spatial light modulator using a liquid crystal material (hereinafter referred to as a "liquid crystal panel").
In a liquid crystal projector, the liquid crystal panel per se does not emit light. Therefore, in a liquid crystal projector, the liquid crystal panel is combined with a light source which emits light to the liquid crystal panel to illuminate it.
A video signal is applied to the liquid crystal panel, then an image formed by the liquid crystal panel is projected to a screen by projection lenses.
By a liquid crystal projector having such a configuration, a small size, highly efficient projector system can be realized.
Liquid crystal materials include ones having the property of changing the polarization of the incident light (optical rotating power) according to the applied electric field.
There are many liquid crystal panels performing light modulation by utilizing this property.
For this reason, the light incident upon the liquid crystal panel must be light linearly polarized in one certain direction (p-polarized light or s-polarized light). The light emitted from the liquid crystal panel rotates in polarization direction according to the video signal applied to the liquid crystal panel.
Therefore, a polarizer is arranged as an analyzer on an emitting side of the liquid crystal panel in order to perform the light modulation.
Further, as a liquid crystal projector employing a polarization conversion optical system, a projector having a switch for turning the aperture on/off (mode of whether or not to constrict the light) is proposed in order to obtain a display image easier to view in accordance with the environment in which the screen is placed. A projector having an aperture in an illumination optical system or a projection optical system is disclosed in for example Patent Document 1.
Patent Document 1: Japanese Patent Publication (A) No. 8-106090

DISCLOSURE OF THE INVENTION

PROBLEM TO BE SOLVED BY THE INVENTION

In a liquid crystal projector optical system achieving an improvement of the efficiency of utilization of the optical source light by using a polarization conversion optical system, since the illumination light incident upon the liquid crystal panel has a finite angle distribution in accordance with the illumination design, the polarization characteristic of the light obliquely striking the liquid crystal panel is disturbed due to the orientation (pretilt) of the liquid crystal molecules (the linearly polarized light becomes elliptical polarized light), and the contrast is lowered due to the light leaking from the analyzer.
When an F number of the illumination optical system is made large (that is, the aperture diameter is made small), the optical output is lowered, but the incident angle upon the liquid crystal panel becomes close to vertical, therefore the polarization characteristic becomes good, and the contrast rises.
On the other hand, when a large F number of the illumination optical system is employed, an optical path length becomes long and an occupied volume of the illumination system increases. As a result, this has demerits such as an increase of the outer size of the set and a rise of the material costs.
Further, in a projector having an aperture on/off mode switching function, there is a limit to the improvement of performance.
By switching a lamp drive voltage to a Lo mode by a two-mode switch turning the aperture on/off at the time of playback of a movie or other program where there are many dark scenes and further changing the mode to the aperture ON (example: light blocking rate of 20%) state, the black level is lowered and an improvement of contrast is achieved (mode such as Cinema Black Pro).
During viewing, the aperture is ON and the system is in a partially light intercepted state. At the same time, a white level is lowered. Therefore, the luminance in a bright scene is lowered in accordance with that. As a result of setting a comfortable light blocking rate, the improvement of contrast becomes only about 20% at most. A much greater improvement cannot be expected.
Further, in general, in an iris type aperture, a stepping mode is frequently used since the control method is easy, but if the system is operated continuously and at a high speed in accordance with the luminance of the projected screen, it generates an unpleasant excitation noise during operation, therefore this system becomes a source of noise in a home use projector in which silence is required, so is unsuitable in use.

An object of the present invention is to provide a projection type display system able to suppress an increase of the outer size of the set and a rise of the material costs and in addition able to achieve an improvement of the contrast, generating only small noise at the time of the aperture operation, and excellent in silence.

MEANS FOR SOLVING THE PROBLEM

A projection type display system of a first aspect of the present invention has a light modulating means for modulating incident illumination light based on input image information and emitting the result, an illumination optical system for making the illumination light from said light source strike said light modulating means, and a projection optical system for projecting the illumination light emitted from said light modulating means, wherein a variable opening aperture system is arranged in the vicinity of a pupil position of said projection optical system, and said aperture system is arranged so as to match the contrast characteristics of said light modulating means and the aperture shape at the time of opening/ closing the aperture.

Preferably, said aperture system slides two aperture blades by a drive system to form an aperture region.

Preferably, at least the edges of said aperture blades forming said aperture region include curved parts.

Preferably, at least the edges of said aperture blades forming said aperture are formed to shapes having a predetermined curvature.

Preferably, the curved shapes of said two aperture blades are formed so as to form an elliptical shape at the time of the use of the aperture.

Preferably, said aperture system is formed so that it can be attached/detached to/from a lens barrel of said projection optical system.

Preferably, a route is formed for blowing circulated cooling air for the aperture system arranged in said projection optical system is formed.

Preferably, said aperture system has an actuator for driving an opening operation by an articulated link mechanism.

Preferably, said actuator includes a galvanometer having a Hall element, and said Hall element outputs from two terminal and has a first differential amplification circuit for differentially amplifying a first output of said Hall element and a reference voltage and supplying the same as a Hall voltage to said Hall element and a second differential amplification circuit for differentially amplifying a second output of said Hall element and said reference voltage and outputting the same.

Preferably, said illumination optical system has a light source for emitting illumination light and a pair of a first multi-lens array and a second multi-lens array for making illumination light emitted from said light source uniform and arranged at a predetermined interval on an optical axis.

Preferably, said aperture system is formed so as to give a light blocking rate other than 100% even in a fully closed state.

Preferably, said aperture system includes a plurality of aperture blades and synchronously opens/closes the plurality of aperture blades.

A projection type display system of a second aspect of the present invention has a liquid crystal panel for modulating incident illumination light based on input image information and emitting the result, an illumination optical system for making the illumination light from said light source strike said light modulating means, and a projection optical system for projecting the illumination light emitted from said light modulating means, wherein a variable opening aperture system is arranged in the vicinity of the pupil position of said projection optical system, a desired high contrast area in a distribution of a light incident angle characteristic of said liquid crystal panel has an elliptical shape, a long axis of the ellipse lies in an oblique direction having a predetermined angle with respect to orthogonal axes of a two-dimensional distribution characteristic, said aperture system has two aperture blades having shapes with predetermined curvatures, an aperture opening shape formed by facing edges of the two aperture blades is an elliptical aperture shape, and the aperture system is arranged so that the elliptical shape of the aperture matches with the elliptical shape of the high contrast area of said liquid crystal panel.

EFFECTS OF THE INVENTION

According to the present invention, when the aperture system is disposed at a predetermined location, a contrast of the video projected onto the screen can be greatly improved without changing the optical design of the projection optical system.

The increase of the occupied volume of the projection optical system due to provision of the aperture system occurs only around the part where the aperture system is attached. A great improvement in the performance can be achieved without detracting from the commercial value.

BRIEF DESCRIPTION OF THE DRAWINGS

[FIG. 1] FIG. 1 is a diagram showing the principle of a liquid crystal projector (projection type display system) employing an optical system according to the present embodiment.
[FIG. 2] FIG. 2 is a diagram showing an embodiment of a liquid crystal projector (projection type display system) employing an optical system according to the present embodiment.
[FIG. 3] FIG. 3 is a diagram showing an arrangement of an optical system in a case where an optical axis of a liquid crystal projector according to the present embodiment is linearly arranged and not showing the light rays.
[FIG. 4] FIG. 4 is a diagram showing an example of the configuration of an aperture system according to the present embodiment.
[FIG. 5] FIG. 5 is a diagram showing an example of the configuration of the aperture system according to the present embodiment at the time of the minimum aperture diameter.
[FIG. 6] FIG. 6A and FIG. 6B are diagrams for explaining the configuration of a base member of the aperture system according to the present embodiment.
[FIG. 7] FIG. 7A to FIG. 7C are diagrams for explaining an example of a preferred aperture shape.
[FIG. 8] FIG. 8A to FIG. 8C are diagrams for explaining another example of the preferred aperture shape.
[FIG. 9] FIG. 9 is a diagram showing an example of an attachment structure of the aperture system in the present embodiment to a lens barrel.
[FIG. 10] FIG. 10A and FIG. 10B are diagrams showing the distribution of the angle of light illuminated on a panel and a dependency of panel contrast on the illumination light angle.
[FIG. 11] FIG. 11A to FIG. 11C are diagrams for explaining the illumination light angle dependency of the panel contrast.
[FIG. 12] FIG. 12 is a diagram for explaining an example of an arrangement for matching the panel contrast characteristic and a cat's eye shape at the time of opening/closing the aperture.
[FIG. 13] FIG. 13 is a diagram showing the relationship of the magnitudes of the ray angle, contrast, and brightness.
[FIG. 14] FIG. 14 is a diagram for explaining the shape of a desired high contrast area in the light incident angle characteristic of the liquid crystal panel.
[FIG. 15] FIG. 15 is a diagram showing an example of the aperture shape satisfying the desired conditions.
[FIG. 16] FIG. 16A to FIG. 16C are diagrams showing examples of arrangement of the aperture for panel contrast employed in a verification process.
[FIG. 17] FIG. 17 is a table showing the rate of rise of contrast for the different types of aperture shapes.
[FIG. 18] FIG. 18 is a circuit diagram showing an example of a galvanometer according to the present embodiment.
[FIG. 19] FIG. 19 is a circuit diagram showing a first example of a Hall element amplification circuit according to the present embodiment.
[FIG. 20] FIG. 20 is a circuit diagram showing a second example of the Hall element amplification circuit according to the present embodiment.
[FIG. 21] FIG. 21 is a diagram showing a cooling structure for the aperture system of the liquid crystal projector according to the present embodiment.
[FIG. 22] FIG. 22 is a diagram showing the cooling structure for the aperture system of the liquid crystal projector according to the present embodiment.

EXPLANATION OF NOTATIONS

100... liquid crystal projector, 101... light source, 102... collimator lens, 103... optical filter, 104... first multi-lens array (MLA), 105... second MLA, 106... polarization conversion element, 107... focus lens, 108... illumination optical system, 110R, 110G... dichroic mirrors, 111, 112, 113... reflection mirrors, 120R, 120G, 120B... focus lenses, 121R, 121G, 121B... polarization plates, 122R, 122G, 122B... liquid crystal panels, 123R, 123G, 123B... polarization plates, 124... dichroic prism, 125... projection optical system, 130, 131... relay lenses, 200... aperture system, 201... base member, and 202, 203... aperture blades.

BEST MODE FOR WORKING THE INVENTION

Below, embodiments of the present invention will be explained related to the attached drawings.

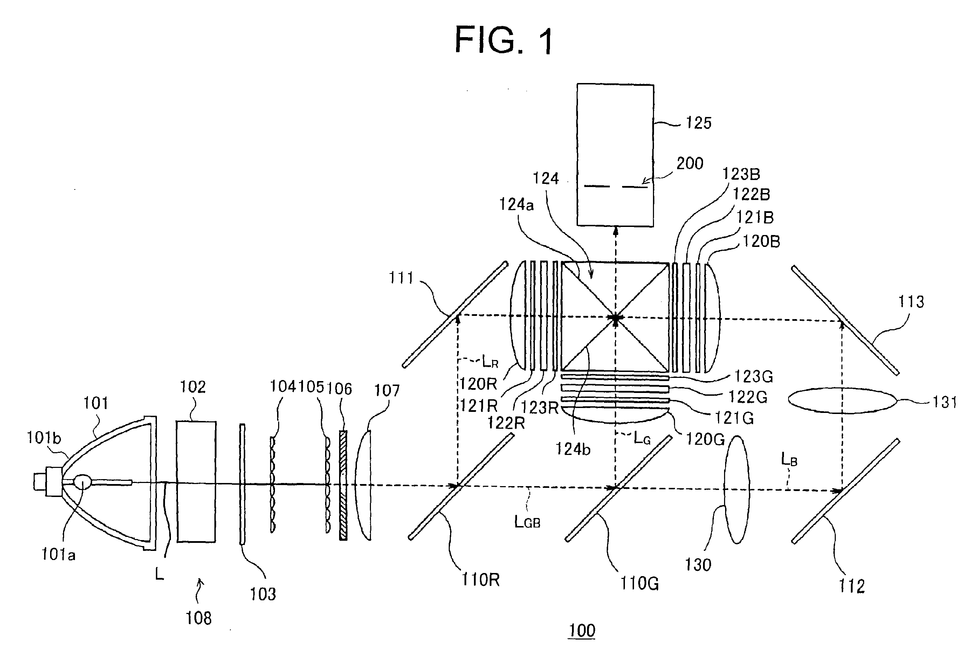

FIG. 1 is a diagram showing the principle of a liquid crystal projector (projection type display system) employing an optical system according to an embodiment of the present invention.

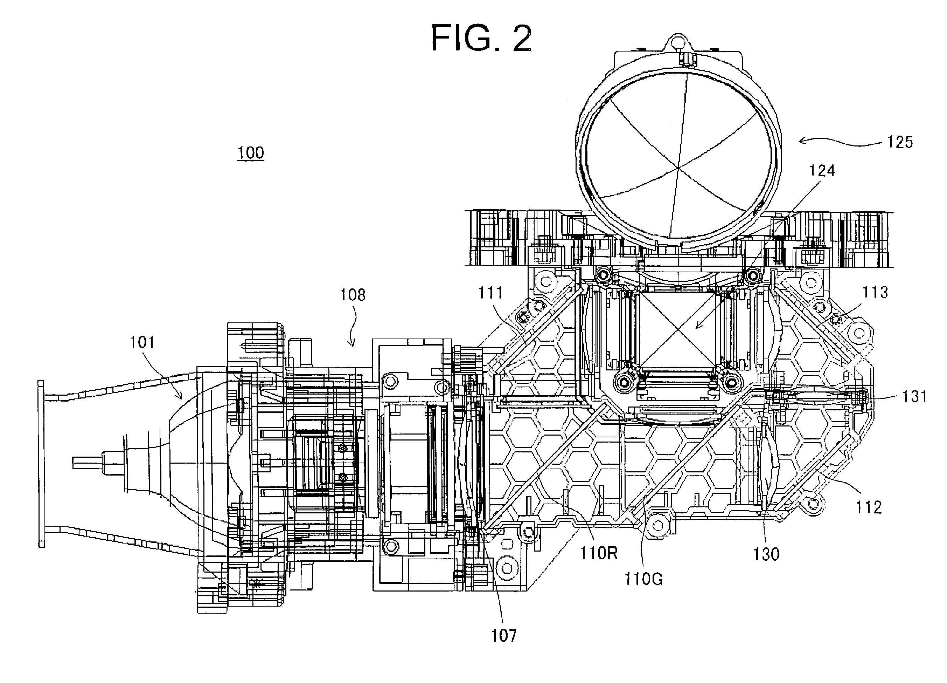

FIG. 2 is a diagram showing a liquid crystal projector (projection type display system) employing an optical system according to an embodiment of the present invention.

The liquid crystal projector 100, as shown in FIG. 1 and FIG. 2, has a light source 101, collimator lens 102, optical filter 103, first multi-lens array (MLA) 104, second MLA 105, polarization conversion element 106, focus lens 107, dichroic mirrors 110R and 110G, reflection mirrors 111, 112, and 113, focus lenses 120R, 120G, and 120B, polarization plates 121R, 121G, and 121B, liquid crystal panels 122R, 122G, and 122B, polarization plates 123R, 123G, and 123B, dichroic prism 124, projection optical system 125 including an aperture system 200, relay lenses 130 and 131, and so on. An illumination optical system 108 is configured by the light source 101, collimator lens 102, optical filter 103, first MLA 104, second MLA 105, polarization conversion element 106, and focus lens 107.

The characterizing portion of the present embodiment, that is, the aperture system 200, is arranged not in the vicinity of the illumination optical system 108, but in the vicinity of a so-called lens pupil position (common to R, G, and B) of the projection optical system 125.

The liquid crystal projector 100 of the present embodiment changes the aperture diameter of the aperture system 200 in cooperation with an APL (average picture level) of the video signal and, at the same time, controls an amplitude of the video signal.

The aperture system 200, as will be explained in detail later, has a simple structure of sliding two plate blades and has the following characteristic features.

It is arranged not in the illumination optical system, but in the projection optical system 125 so as to reduce the size of the iris mechanism.

It forms the two plate blades as rounded opening slides forming rounded shapes having predetermined curvatures so as to eliminate the ghost directivity of a rectangular opening. A so-called cat's eye shape is formed by the facing edges of the two rounded plate blades having the predetermined curvatures. The aperture is opened/closed corresponding to the shapes of the fly eyes of the first MLA 104 and the second MLA 105 to thereby make the light amount uniform.

It is arranged so as to match the panel contrast characteristics and the elliptical shape constituted by the cat's eye shape at the time of opening/closing the aperture.

It makes the aperture system 200 a mechanism which can be attached/detached to/from the lens barrel of the projection optical system 125 so as to achieve an improvement of the service property.

It optimizes the material and diameter of the pins of the plate blades and slide guide mechanism.

It forms a route for blowing circulated cooling air to the aperture of the lens.

It employs not a stepping motor, but a galvanometer as the drive system.

Below, the configurations and functions of the components of the liquid crystal projector 100 will be explained, the specific configuration and function of the aperture system 105 will be explained, and further the cooling structure of the liquid crystal projector will be explained.

The light source 101 is constituted by a discharge lamp 101a and a reflection focus mirror 101b. The reflection focus mirror 101b focuses light emitted from this discharge lamp 101a and emits the result toward the collimator lens 102.

The collimator lens 102 converts the illumination light L emitted from the light source 101 to a parallel beam and emits it toward the optical filter 103.

The optical filter 103 eliminates unnecessary light of an infrared ray region and an ultraviolet region included in illumination light L emitted from the light source 101 and traveling via the collimator lens 102.

The first MLA 104 divides the illumination light L from the light source 101 to a plurality of lights and arranges optical images of these in the vicinity of the light incident surface of the second MLA 105.

More specifically, the first MLA 104 has a plurality of lenses arranged in an array, divides the illumination light L to a plurality of light beams which it then focuses, and lays out light spots of the divided images at predetermined locations (in the vicinity of the light incident surface of the second MLA 105).

Then, the images of the light source 101 formed by the focusing to the second MLA 105 are projected to the vicinity of the arrangement position of the aperture system 200 of the projection optical system 125, that is, the vicinity of the pupil position of the lens.

The second MLA 105 makes the light source images divided by the first MLA 104 strike the polarization conversion element 106 so as to enable utilization of the same as illumination lights of the liquid crystal panels 122R, 122G, and 122B.

In the second MLA 105, a plurality of lenses corresponding to a plurality of light spots focused by the first MLA 104 are arranged. The lenses of the second MLA 105 focus the divided images of the first MLA 104 via the focus lens 107 onto the liquid crystal panels 122R, 122G, and 122B while superimposing these on each other and makes lights emitted from the light source 101 uniform.

The polarization conversion element 106 is constituted by polarization beam splitters aligned in for example a strip and phase difference plates intermittently provided corresponding to these, converts p-polarized light components of incident illumination lights L to s-polarized light components, and outputs illumination lights having polarization directions arranged in a line including a lot of s-polarized light components as a whole.

The focus lens 107 focuses lights so that the illumination lights L passing through the polarization conversion element 106 are superimposed on each other on the liquid crystal panels 122R, 122G, and 122B.

The dichroic mirror 110R is inclined by 45 degrees relative to the optical axis of the illumination lights L passing through the focus lens 107 and having polarization directions arranged in a line, reflects only light in a red wavelength region (sometimes also referred to as red light) LR among the illumination lights L toward the reflection mirror 111, and passes lights LG and LB in wavelength areas other than the former therethrough.

The reflection mirror 111 is inclined by 45 degrees relative to the optical axis of the light LR reflected at the dichroic mirror 110R and reflects the light LR toward the focus lens 120R.

The dichroic mirror 110G is inclined by 45 degrees relative to the optical axes of the lights LG and LB passing through the dichroic mirror 110R and reflects only the light in a green wavelength area (sometimes also referred to as green light) LG among the lights LG and LB passing through the dichroic mirror 110R toward the focus lens 120G and passes the light LB in the other wavelength area (blue wavelength area) therethrough.

The relay lenses 130 and 131 are provided in order to re-focus the blue light LB in the middle of the light path since the length of the path of the light in the blue wavelength area (sometimes also referred to as blue light) LB from the dichroic mirror 110B to the liquid crystal panel 122B is relatively long.

The light LB in the blue wavelength area passed through the dichroic mirror 110G passes through the relay lenses 130 and 131 and is reflected by the reflection mirror 113 toward the focus lens 120G.

The focus lenses 120R, 120G, and 120B and the liquid crystal panels 122R, 122G, and 122B are arranged at predetermined locations with respect to three side faces of the dichroic prism 124 having a cubic shape.

Further, on the incident sides and emitting sides of the liquid crystal panels 122R, 122G, and 122B, polarization plates 121R, 121G, and 121B are arranged as polarizers, and polarization plates 123R, 123G, and 123B are arranged as analyzers.

The polarization plates 121R, 121G, and 121B are fixed to the emitting sides of the focus lenses 120R, 120G, and 120B, and the polarization plates 123R, 123G, and 123B are fixed on three surfaces of the incident side of the dichroic prism 124.

The liquid crystal panels 122R, 122G, and 122B modulate the intensities of the color lights LR, LG, and LB incident through the focus lenses 120R, 120G, and 120B according to video signals corresponding to the applied three primary colors of red, green, and blue.

Namely, the color lights LR, LG, and LB in predetermined polarization directions passing through the polarization plates 121R, 121G, and 121B are rotated in their polarization planes based on video signals applied to the liquid crystal panels 122R, 122G, and 122B.

The predetermined polarized light components of lights rotated in polarization planes pass through the polarization plates 123R, 123G, and 123B and strike the dichroic prism 124.

The dichroic prism 124 is configured by for example joining a plurality of glass prisms. The joint surfaces of the glass prisms are formed with interference filters 124a and 124b having predetermined optical characteristics.

The interference filter 124a reflects the blue light LB and passes the red light LR and the green light LG.

The interference filter 124b reflects the red light LR and passes the green light LG and the blue light LB.

Accordingly, the color lights LR, LG, and LB modulated by the liquid crystal panels 122R, 122G, and 122B are combined and made incident upon the projection optical system 125.

The projection optical system 125 projects for example video lights incident from the dichroic prism 124 toward a screen or other projection plane. On the screen, a color video is therefore projected.

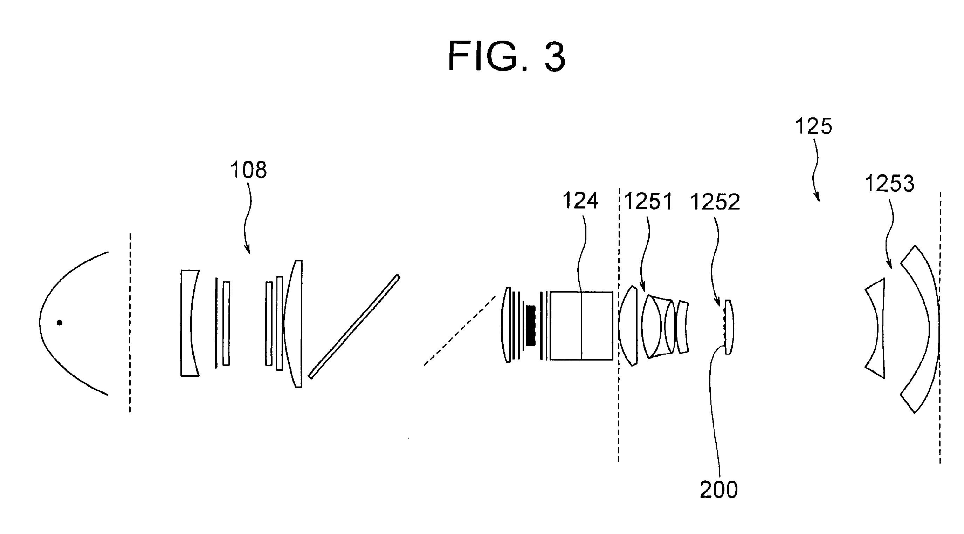

FIG. 3 is a diagram showing the arrangement of an optical system in a case where the optical axis of the liquid crystal projector according to the present embodiment is linearly arranged and does not show the light rays.

As shown in FIG. 3, the projection optical system 125 includes a first lens group 1251, a second lens group 1252, and a third lens group 1253.

Then, the aperture system 200 is arranged on the light incident side of the second lens group 1252.

Below, the specific configuration and function of the aperture system 200 will be explained with reference to the drawings.

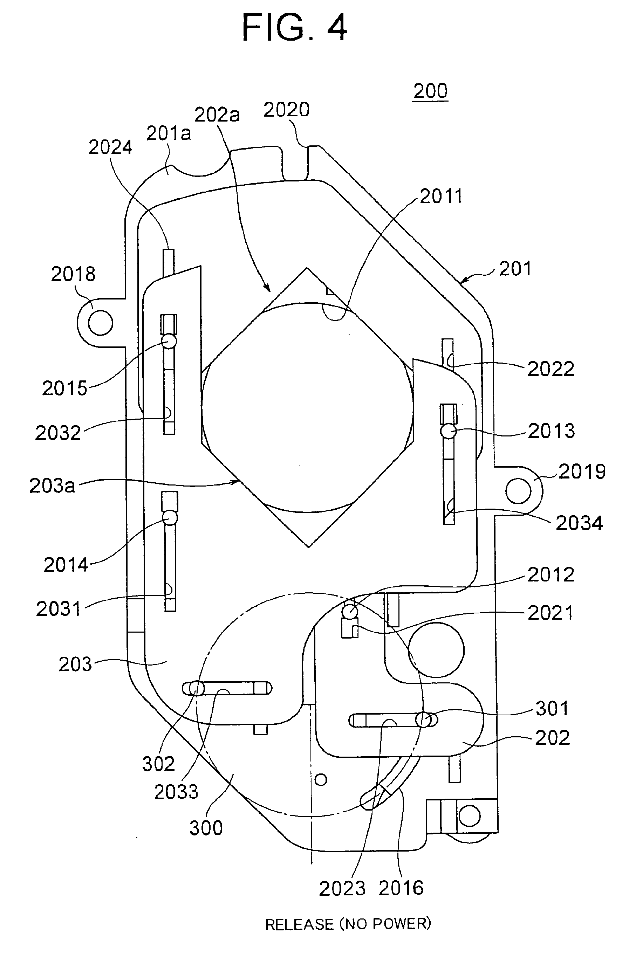

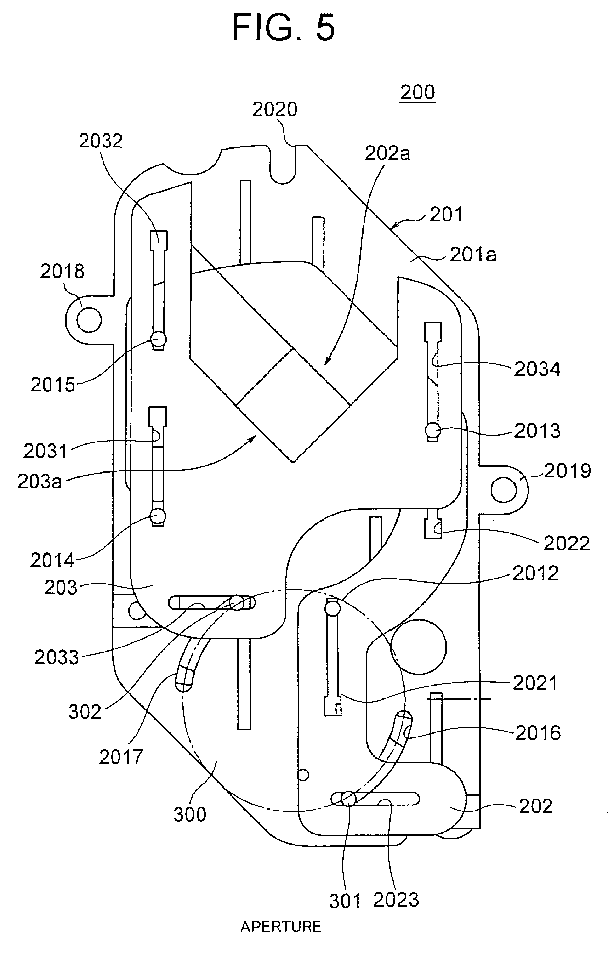

FIG. 4 is a front view showing an example of the configuration of an aperture system according to the present embodiment at the time of opening. Further, FIG. 5 is a front view showing an example of the configuration of an aperture system according to the present embodiment at the time of the maximum aperture closure (minimum aperture diameter).

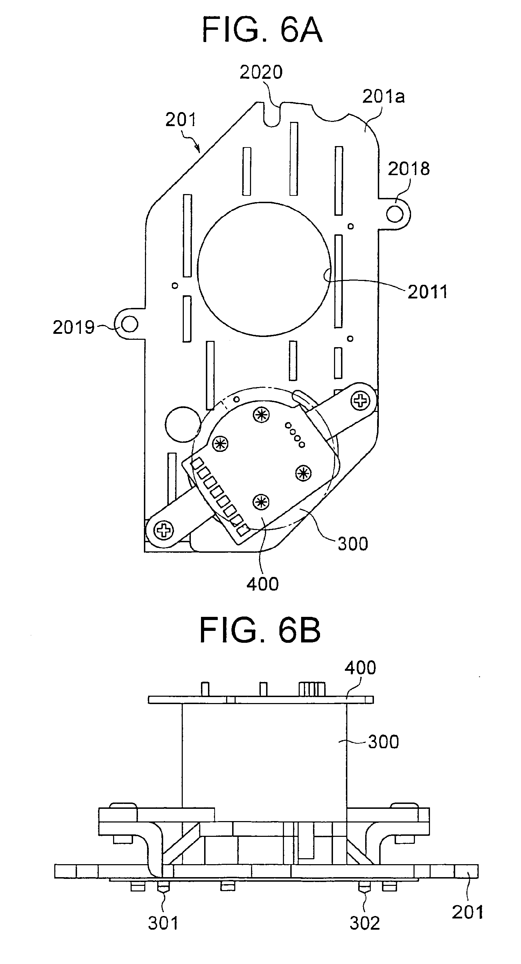

Further, FIG. 6A and FIG. 6B are diagrams viewing the aperture system according to the present embodiment from the back side of the base member.

The aperture system 200 of the present embodiment has a plate shaped base member 201 forming substantially a parallelopiped having a predetermined thickness and two aperture blades 202 and 203 arranged on the front side of the base member 201 so that they are partially superimposed on each other and sliding in a longitudinal direction of the base member 201 in response to rotation of the galvanometer.

A circular aperture opening 2011 is formed in the base member 201 at one side from the substantial center of the base member 201 in the longitudinal direction. On the other side of the base member 201 at the back surface, a galvanometer 300 is mounted. A base plate 400 is arranged at a vertex of the galvanometer 300. The base plate 400 is connected through a lead wire to a not shown control circuit board on which the Hall element of the galvanometer 300 and ends of a brake coil and drive coil are arranged at locations away from the aperture system 200.

On the surface 201a of the base member 201, stopper pins 2012, 2013, 2014, and 2015 for the sliding of the two aperture blades 202 and 203 are formed at side portions in the longitudinal direction while sandwiching the opening 2011 therebetween.

Further, in the base member 201, two arc-shaped rotation guide holes 2016 and 2017 are formed. These two rotation guide holes 2016 and 2017 are guide holes of the base member 201 for guiding two rotation output shafts 301 and 302 of the galvanometer 300 and limiting rotation ranges of the rotation output shafts 301 and 302 of the galvanometer 300 to predetermined ranges and are formed at locations facing eacho ther substantially 180 degrees apart about the cylindrical axis of the cylindrically shaped galvanometer 300.

The aperture blade 202 is formed with straight, elongated engagement holes 2021 and 2022 in which stopper pins 2012 and 2013 engage, restricting the slide range with predetermined lengths, and formed along the longitudinal direction and an engagement hole 2023 formed at one end side in a linear state so as to substantially perpendicularly intersect the guide direction of the engagement holes 2021 and 2022, engaging with the end of the rotation output shaft 301 of the galvanometer 300 inserted through the rotation guide hole 2016 of the base member 201, and guiding this. The aperture blade 202, as shown in FIG. 4 and FIG. 5, has one the output rotation shaft 301 engaged with the engagement hole 2023 at one end, has the stopper pin 2012 engaged in the engagement hole 2021 at the substantial center from one end, and has the stopper pin 2013 engaged in the engagement hole 2022 together with the engagement hole of the aperture blade 203.

As shown in FIG. 4 and FIG. 5, an iris blade 202a is formed by a shape with the part from one end to the center of the aperture blade 202 located at the right side of the aperture opening 2011 of the base member 201 in the figure and with the part from the center to the other end formed along the peripheral edge of the aperture opening 2011 from one side of the base member 201 and reaching the left side of the aperture opening 2011 in the figure.

Further, the part of the aperture blade 202 located on the left side of the aperture opening 2011 in the figure is formed with, together with the engagement hole of the aperture blade 203, an engagement hole 2024, in which the stopper pin 2015 is engaged formed along the longitudinal direction, in a straight elongated state.

This iris blade 202a is controlled in operation so as to open/close by substantially half of the aperture opening 2011 in response to rotation of the galvanometer 300.

The aperture blade 203 is formed with straight, elongated engagement holes 2031 and 2032 in which stopper pins 2014 and 2015 engage, restricting the slide range with predetermined lengths, and formed along the longitudinal direction and an engagement hole 2033 formed at one end side in a linear state so as to substantially perpendicularly intersect the guide direction of the engagement holes 2031 and 2032, engaging with the end of the rotation output shaft 302 of the galvanometer 300 inserted through the rotation guide hole 2017 of the base member 201, and guiding this. - As shown in FIG. 4 and FIG. 5, an iris blade 203a is formed by a shape with the part from one end to the center of the aperture blade 202 located at the left side of the aperture opening 2011 of the base member 201 in the figure and with the part branched from the center formed along the peripheral edge of the aperture opening 2011 from the other side of the base member 201 and reaching the right side of the aperture opening 2011 in the figure.

Further, the part of the aperture blade 203 located on the right side of the aperture opening 2011 in the figure is formed with, together with the engagement hole 2022 of the aperture blade 202, an engagement hole 2034, in which the stopper pin 2013 is engaged formed along the longitudinal direction, in a straight elongated state.

This iris blade 203a is controlled in operation so as to open/close by substantially half of the aperture opening 2011 in response to rotation of the galvanometer 300.

Further, the aperture system 200 of the present embodiment achieves improvement of the service property as a mechanism which can be attached/detached to/from the lens barrel of the projection optical system 125 as previously explained.

For this reason, the peripheral edge of the base member 201 is formed with attachment pieces 2018 and 2019 having screw holes for enabling attachment/detachment to/from the lens barrel by screws formed.

Further, one end of the base member 201 in the longitudinal direction is formed with a positioning use notch 2020 which can be inserted over a positioning part of the lens barrel.

Further, in the present embodiment, as materials of the aperture blades 202 and 203 and the stopper pins 2012 to 2015 (base member 201), the following materials can be employed.

All of the aperture blades 202 and 203 and stopper pins 2012 to 2015 (base member 201) are formed by metal (SUS). In this case, it becomes possible to continuously use these under a high temperature condition of for example 140°C more than 10 million times and therefore it is possible to form an aperture system 200 excellent in durability.

In addition, for example, it is also possible to form the aperture blades 202 and 203 by a plastic (PET) and form the stopper pins 2012 to 2015 (base member 201) by a metal such as aluminum. In this case as well, a sufficient durability can be obtained.

Further, it is also possible to employ a metal made of an SK material as the material of the aperture blades 202 and 203, and employ a metal such as aluminum as the pin material.

The aperture blades 202 and 203 have regions superimposed on each other, but by appropriately selecting the above materials etc., the frictional resistance at the time of opening/closing is reduced, and a smooth open/close operation is achieved.

In the aperture system 200 of the present embodiment, the light blocking rate is not 100% even in the fully closed state, but only up to about 80%.

The minimum aperture opening diameter is set so that the uniformity is within a target standard and envisioning system trouble such as generation of smoke due to an abnormal temperature rise of the blade surfaces.

By configuring the system in this way, even when forced cooling of the aperture system is suspended due to some system abnormality, since part of the light of the light source (illumination light L) passes through it, the danger of becoming remarkably high in temperature is avoided.

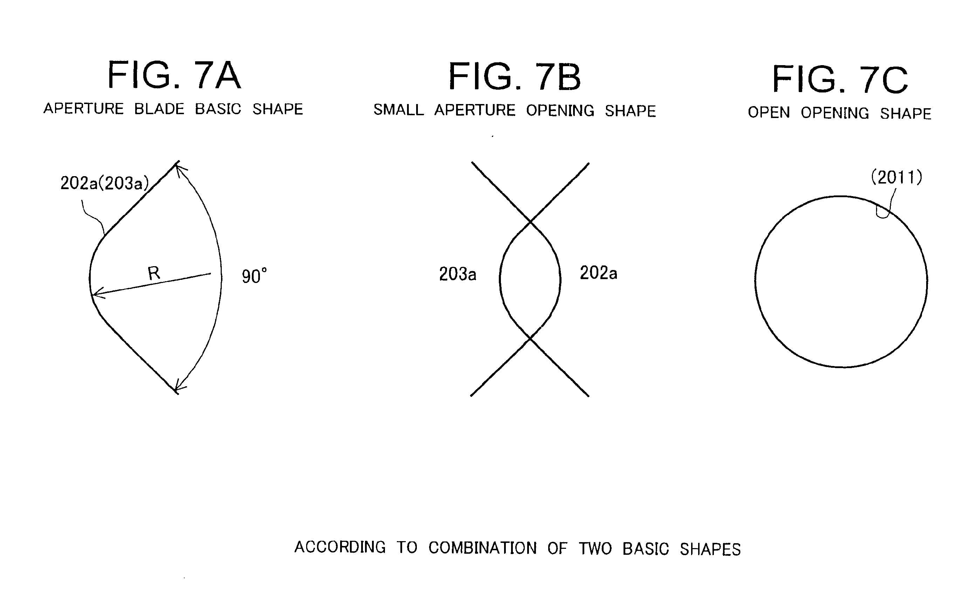

Further, the aperture region formed by the iris blade 202a of the aperture blade 202 and the iris blade 203a of the aperture blade 203, in the example of FIG. 4 and FIG. 5, is formed in a substantially rectangular shape. In this example of the configuration, a ghost is liable to easily be manifested due to the rectangular opening. Therefore, as shown in FIG. 7A and FIG. 7B, desirably the system is configured so that the iris blades 202a and 203a have predetermined rounded parts (parts having substantially arc shapes), and the small aperture opening shape formed by the ends of the iris blade 202a and 202b facing each other becomes a so-called cat's eye shape. No edges formed by intersecting straight lines is formed in the opening shape, so the manifestation of a ghost around the projected video can be suppressed.

In this case, the opened opening shape becomes substantially a circular state as shown in FIG. 7C.

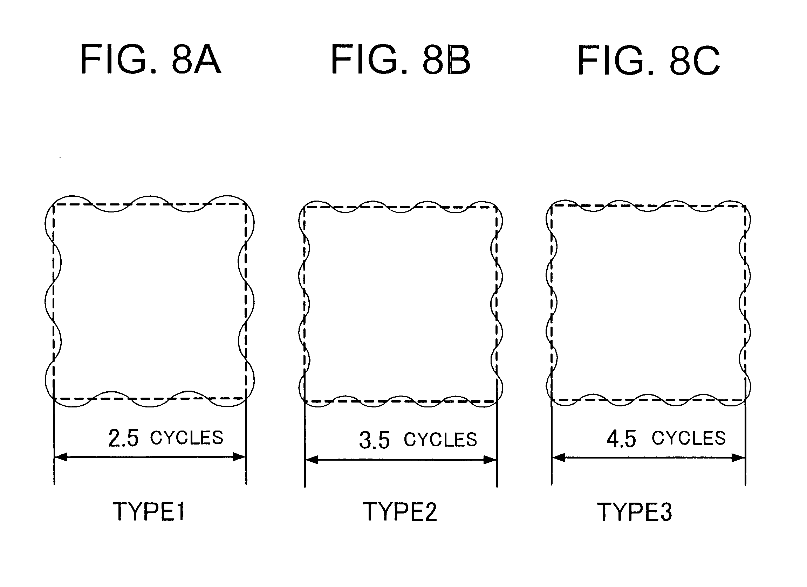

Note that, as in the example of FIG. 7, desirably predetermined rounded shapes are imparted to the iris blades 202a and 202b, and the small aperture opening shape is formed so as to become the cat's eye state, but the configuration for suppressing the manifestation of a ghost is not limited to this. For example as shown in FIG. 8A, FIG. 8B, and FIG. 8C, the manifestation of a ghost can be sufficiently suppressed also by forming a so-called sinusoidal curve at each side of the rectangular opening of an aperture.

Next, the attachment structure of the aperture system 200 in the present embodiment will be explained.

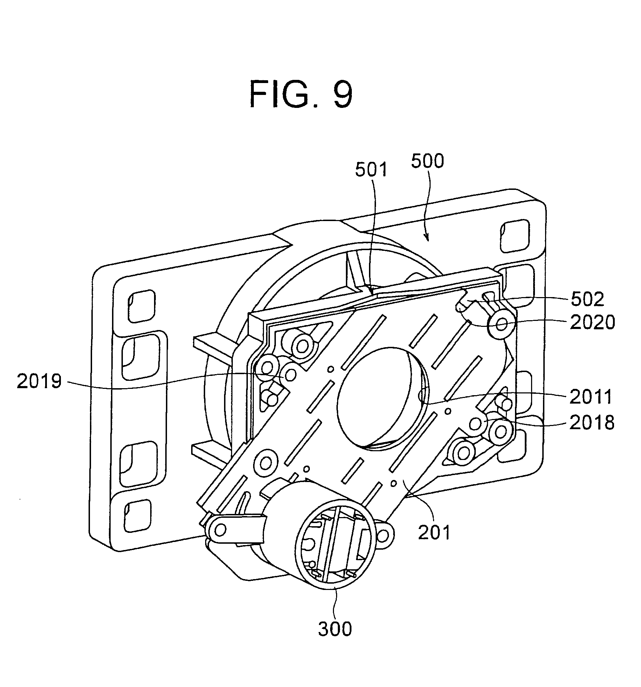

FIG. 9 is a diagram showing an example of the attachment structure of the aperture system 200 to the lens mirror cylindrical portion in the present embodiment.

In the aperture system 200, the notch 2020 is inserted over a positioning part 502 of the aperture attachment part 501 of the lens barrel 500 and the system fastened by screws via the positioning attachment pieces 2018 and 2019. In this case, it is possible to attach the system so that substantially the center of the aperture opening 2011 substantially coincides with the optical axis of the lens barrel 500.

Further, in the present embodiment, the aperture system 200 is arranged obliquely with respect to the lens barrel 500, for example so that it is inclined by substantially 45 degrees (or 135 degrees) so as to match the panel contrast characteristics and the cat's eye shape at the time of opening/closing the aperture.

Below, this oblique arrangement will be explained.

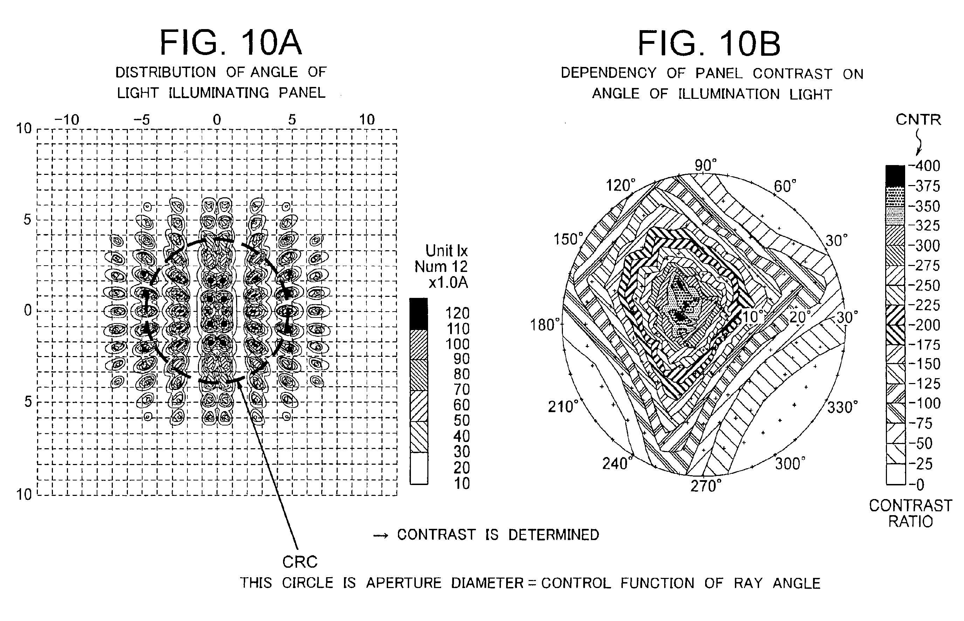

FIG. 10A is a diagram showing a distribution of angles of light illuminating the the panel, and FIG. 10B is a diagram showing the dependency of the panel contrast on the angle of the illumination light (incident light).

First, the panel contrast according to the present embodiment and FIG. 10B will be explained.

Light intensity modulation elements such as the transmission type liquid crystal panel have different modulation characteristics (transmission characteristics in the case of the transmission type liquid crystals) according to the input angle of the illumination beam with respect to each element.

Accordingly, the value of the contrast ratio CNTR defined below depends upon the angle of light incidence.

$$CNTR = BRT\text{--}W / BRT\text{--}B$$

Here, BRT-W indicates the brightness at the time of a white display. This brightness BRT-W is proportional to the transmission ratio at the time of a white display. BRT-B indicates the brightness at the time of a black display. This brightness BRT-B is proportional to the transmission ratio at the time of a black display.

This contrast ratio CNTR is indicated by values attached to the ordinate on the right side in FIG. 10B.

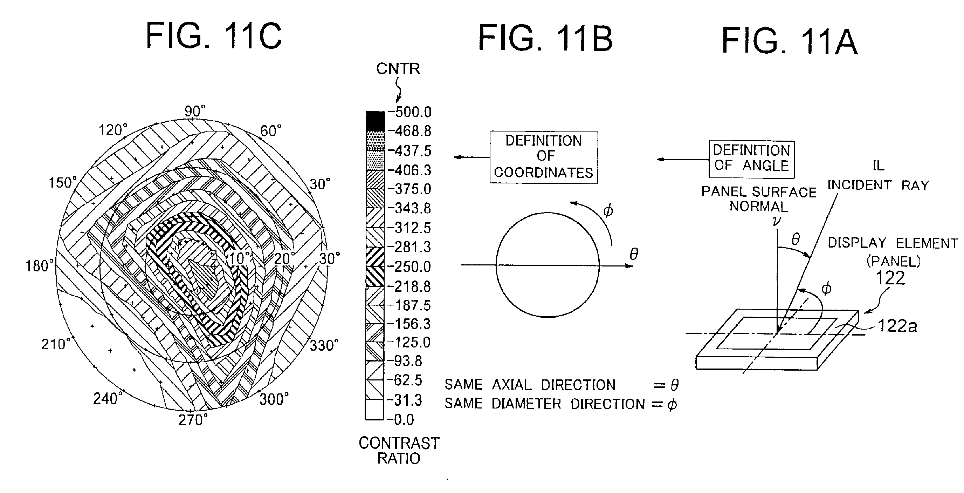

Further, the angles 0 degree (360 degrees) to 330 degrees attached to the circular distribution diagram indicating the dependency of the panel contrast on the angle of the illumination light (incident light) of FIG. 10B will be explained with reference to FIG. 11A to FIG. 11C.

As shown in FIG. 11A, the angle formed by the incident light IL with respect to a normal $\gamma$ with respect to the surface of the display element constituted by the liquid crystal panel 122 (R, G, B) is defined as $\theta$, and the angle formed by the incident light IL with respect to the panel surface 122a is defined as $\phi$.

Then, as shown in FIG. 11B, the angle $\phi$ in the same diameter direction based on the same axial direction of the angle $\theta$ is attached to the figure as shown in FIG. 11C.

The first MLA 104 of the illumination optical system 109, as shown in FIG. 10A, divides the illumination light L from the light source 101 to a plurality of lights, focuses them, and lays out the light spots of the divided images at predetermined locations (vicinity of the light incident surface of the second MLA 105).

Then, the images of the light source 101 formed by the focusing to the second MLA 105 are projected to the vicinity of the arrangement position of the aperture system 200 of the projection optical system 125, that is, the vicinity of the pupil position of the lens.

A circle CRC in FIG. 10A acts as a control function part of the aperture diameter, that is, the ray angle.

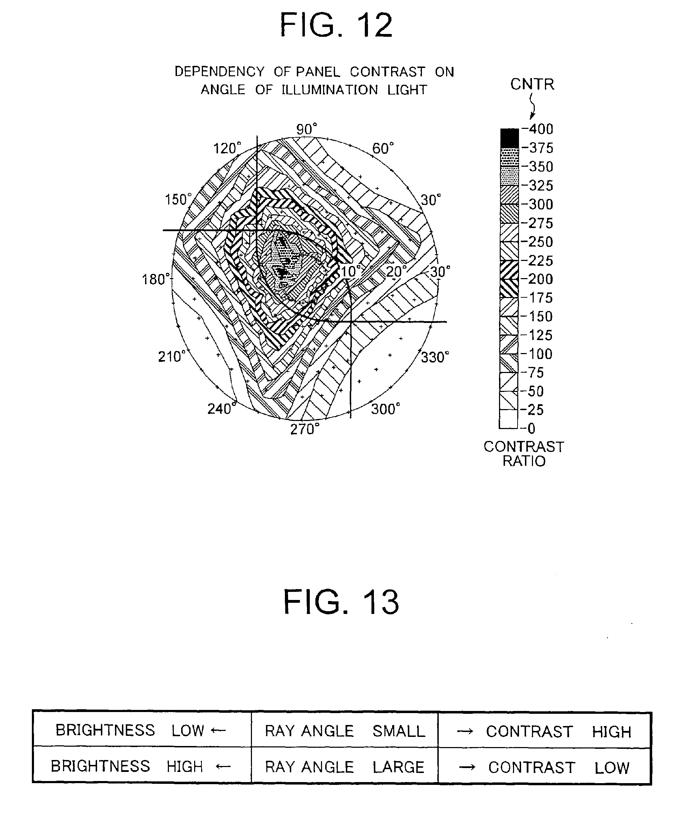

Further, the panel contrast characteristics are characteristics as shown in FIG. 10B, therefore, in the present embodiment, as shown in FIG. 12, the arrangement is made so as to match the panel contrast characteristics and the cat's eye shape at the time of opening/closing the aperture.

This is because the ray angle is small in the high contrast area, and the contrast is improved when the rays is constricted.

Namely, as shown in FIG. 13, this is performed in order to obtain the optimum characteristics corresponding to the fact that the contrast becomes high and the brightness becomes low when the ray angle is small, while the contrast becomes low and the brightness becomes high when the ray angle is large.

Here, the appropriateness of the aperture shape and oblique arrangement will be considered.

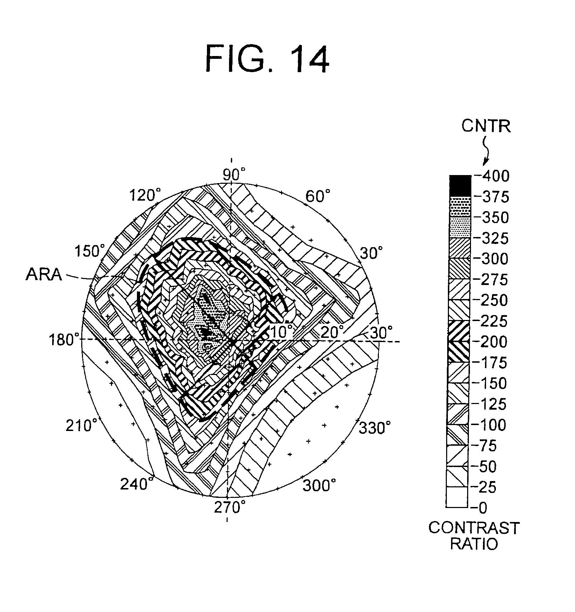

FIG. 14 is a diagram showing the light incident angle characteristic of a liquid crystal panel.

In FIG. 14, when a range having a contrast ratio CNTR of 200 or more is defined as the high contrast area for convenience, an area ARA enclosed by a broken line in FIG. 14 becomes the high contrast area and has the following characteristic features (see FIG. 11 for the following definition of direction).

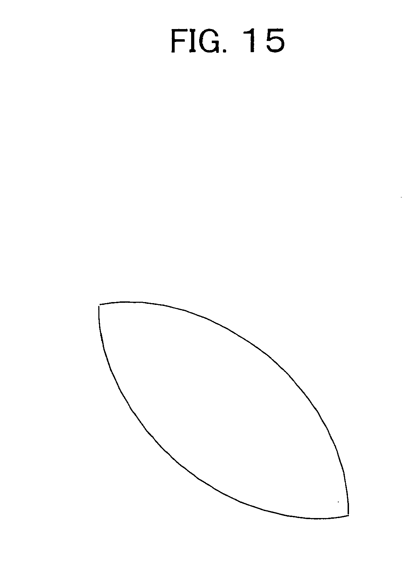

1) The area ARA is an elliptical shape.
2) The long axis of the ellipse is the direction of 135 degrees.
3) The long axis of the ellipse is the direction of 45 degrees in the case where the chirality of the liquid crystal is reverse. The aperture shape satisfying these conditions is the elliptical cat's eye shape as shown in FIG. 15.

From such relationships, in the present embodiment, the desired high contrast area in the distribution of light incident angle characteristics of a liquid crystal panel using for example a TN liquid crystal has an elliptical shape, the long axis of this ellipse is located in the oblique direction having a predetermined angle relative to the orthogonal axis of the two-dimensional distribution characteristic, and in the aperture system 200, as explained above, the aperture opening shape formed by the facing edges of the two iris blades 202a and 203a is an elliptical aperture shape (cat's eye shape) and arranged so that the elliptical shape of the aperture matches with the elliptical shape of the high contrast area of the liquid crystal panel described above.

Next, an example of verification of the relationship between the panel contrast and the aperture shape will be explained.

For example, simulation is possible by taking a certain region defined by the aperture opening on the panel and using the angle component of predetermined light incident upon the panel as shown in FIG. 10A with respect to that region and its light amount and the predetermined contrast value on a so-called border line (contour line) shown with respect to the angle of the predetermined incident light as in FIG. 10B or FIG. 14 as parameters. This simulation enables the verification shown below.

The following example is the result of inspecting the arrangement of the aperture giving the optimum contrast of the system when using an aperture of the slide type employed in the present embodiment and having a simple configuration and high reliability.

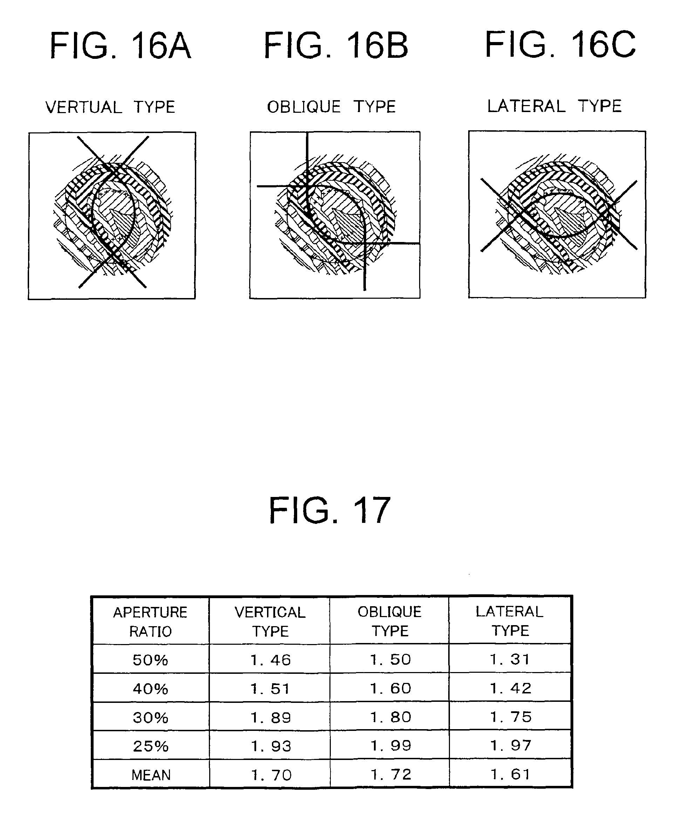

In this example, the cat's eye aperture shape of FIG. 15 was inspected for the vertical arrangement type as shown in FIG. 16A, the oblique arrangement type as shown in FIG. 16B, and the lateral arrangement type as shown in FIG. 16C.

The rate of rise of the contrast according to the aperture ratio was calculated by superimposing the aperture shape pattern on the contrast distribution.

The aperture ratio AR is given by the following equation.

$$AR = BRT\text{-}C / BRT\text{-}O$$

Here, BRT-C indicates the brightness when the aperture is closed, and BRT-O indicates the brightness when the aperture is open.

In this case, the closed state can freely change, but as representative points, the trial calculation was made with magnitudes giving aperture ratios of 50%, 40%, 30%, and 25%.
Then, the rate of rise of the contrast CNTUR is given by the following equation.

$$CNTUR = CNTR\text{-}C/CNTR\text{-}O$$

Here, CNTR-C indicates the contrast ratio when the aperture is closed, and CNTR-O indicates the contrast ratio when the aperture is open.

FIG. 17 is a diagram showing the result of this verification.

As shown in FIG. 17, in the case of an aperture ratio of 50%, the rate of rise of contrast is 1.46 in the vertical arrangement type, the rate of rise of contrast is 1.50 in the oblique arrangement type, and the rate of rise of contrast is 1.31 in the lateral arrangement type.

In the case of an aperture ratio of 40%, the rate of rise of contrast is 1.51 in the vertical arrangement type, the rate of rise of contrast is 1.60 in the oblique arrangement type, and the rate of rise of contrast is 1.42 in the lateral arrangement type.

In the case of an aperture ratio of 30%, the rate of rise of contrast is 1.89 in the vertical arrangement type, the rate of rise of contrast is 1.80 in the oblique arrangement type, and the rate of rise of contrast is 1.75 in the lateral arrangement type.

In the case of an aperture ratio of 25%, the rate of rise of contrast is 1.93 in the vertical arrangement type, the rate of rise of contrast is 1.99 in the oblique arrangement type, and the rate of rise of contrast is 1.97 in the lateral arrangement type.

When taking the average of the above, the rate of rise of contrast is 1.70 in the vertical arrangement type, the rate of rise of contrast is 1.72 in the oblique arrangement type, and the rate of rise of contrast is 1.61 in the lateral arrangement type. It is calculated that the rate of rise of contrast of the oblique arrangement type employed in the present embodiment is the highest.

Namely, by matching the aperture shape with the contrast characteristics of the elements, the degree of improvement of contrast can be maintained high.

As another method for improvement of contrast, there is a method of arranging the aperture of the illumination optical system or using an optical compensation function etc. other than the aperture. However, a configuration arranging the aperture in the illumination optical system has the disadvantages that a change of design of the illumination optical system is necessary and the size becomes larger, while a configuration using the optical compensation function etc. has the disadvantages that the degree of the improvement of contrast is low, a design change is necessary, and the reliability is insufficient.

Accordingly, matching the aperture shape with the contrast characteristics of the elements so as to maintain the improvement of contrast high as in the present embodiment contributes to smaller size and less change of design.

Further, an embodiment in which the aperture shape was made elliptical inclined relative to the long side direction of the liquid crystal panel was explained, but matching this aperture shape with the contrast characteristics of the elements further includes also the arrangement of the aperture offset relative to the optical axis of the projection lens and the further optimization of the shape of the aperture from an ellipse matching with the contrast characteristics of the elements.

In this way, as a liquid crystal panel able to greatly contribute to an improvement of contrast by arranging the aperture obliquely, there can be explained for example a liquid crystal panel using a TN (twist nematic) liquid crystal having a twist direction in the horizontal or vertical direction.

In the present embodiment, the output shafts 301 and 302 of the galvanometer 300 and the aperture blades 202 and 203 are linked by engagement. When a control voltage for obtaining a predetermined aperture opening is applied to the galvanometer 300, the rotary forces of the galvanometer output shafts 301 and 302 are converted to linear movement through the engagement holes 2023 and 2033 of the aperture blades 202 and 203 and therefore the aperture blades 202 and 203 slide. At this time, any aperture opening can be obtained according to the control voltage value from the outside (in this case, the control side of the projector).

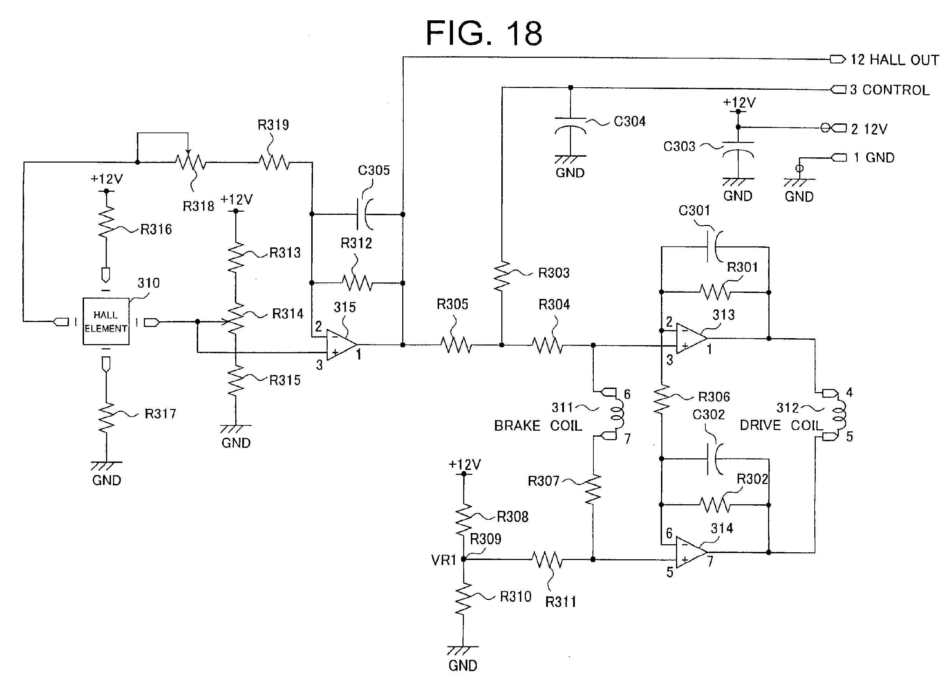

FIG. 18 is a circuit diagram showing an example of a galvanometer according to the present embodiment.

This galvanometer 300, as shown in FIG. 18, has a Hall element 310, brake coil 311, drive coil 312, operational amplifiers 313 to 315, resistor elements R301 to R319, and capacitors C301 to C305. The resistor elements R309 and R314 are variable resistor elements.

When the position signal of the target opening aperture is input as the control signal of the galvanometer 300, a current flows in the drive coil 312 and the output shafts of the galvanometer rotate.

Along with the shaft rotation, the rotation position signal is output from the Hall element 310 disposed inside the galvanometer 300. When reaching a balanced state with the input control signal, the output shafts are stopped.

The brake coil 311 acts as a pickup sensor of the drive coil 312 and acts as a brake against abrupt change by constantly applying feedback to hold the balanced state.

In order to eliminate individual differences (variation) of the control voltage and rocking angle due to the individual differences of mainly the Hall element 310 forming the galvanometer 300, a not shown control use microprocessor provided on the projector side is used for an initialization operation when the powe is turned on.

By the output voltage of the Hall element 310, voltages at an open end and a closed end are sampled. The absolute amount of output voltages from the open end to the closed end of the aperture system 200 is stored in a memory prepared on the control side.

The relationship between the rocking angle and the output voltage may be understood from the maximum rocking angle and the absolute amount of the above output voltages of the galvanometer 300, so the absolute rotation angles of the output shafts can be positioned at any angles.

Next, the reason for the use of the galvanometer 300 as the drive source will be explained.

The galvanometer 300 can perform a high speed operation (about 50 to 70 ms from the fully open to the fully closed state) with very little noise, almost silent, at the time of operation.

The aperture system 200 must perform the positioning of the aperture blades 202 and 203 at the target positions with a predetermined speed and precision.

In general, with an iris type aperture etc., a stepping motor is frequently used since the control method is simple, but when the system is operated continuously and at a high speed in accordance with the luminance of the projected screen, the system generates unpleasant excitation noise in operation. This becomes a source of noise in a home use projector for which silence is required, so this is unsuitable for use.

Contrary to this, the galvanometer 300 can suppress machine noise by driving by only articulated links without using gears which become a source of noise. The currents flowing in the drive coil 312 and the brake coil 311 are optimized, the acceleration degree curves at times of the start and stopping are optimized, and the control is made so as not to generate an impact sound by inertia of mechanical parts and backlash at times of acceleration and deceleration.

The output shafts of the galvanometer 300 generate mechanical striking sounds at the mechanical end positions. In actual control, they are used inside from the rocking limit, that is, the end positions so as not to generate a striking sound at the end positions.

Here, the amplification circuit arranged on the output side of the Hall element 300 will be considered.

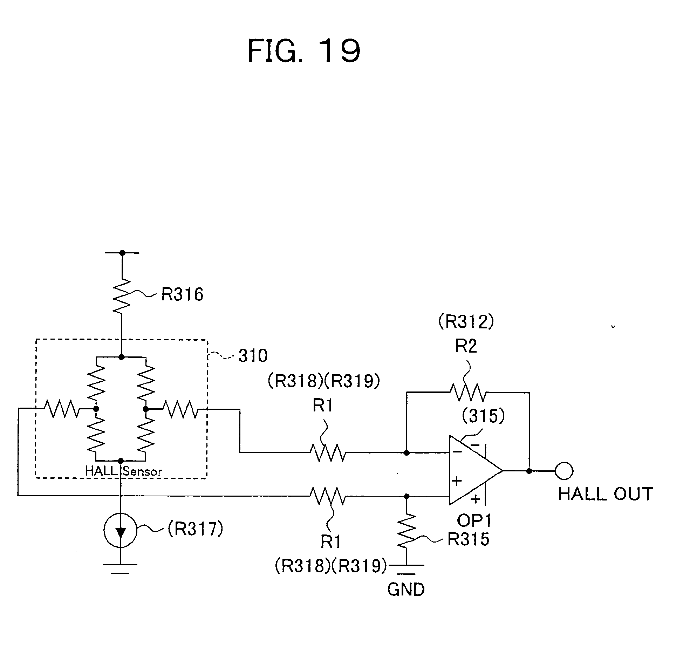

The Hall element amplification circuit in the circuit of FIG. 18 can be equivalently expressed as shown in FIG. 19. In this circuit, there is a same phase voltage of 1/2 of the element voltage of the Hall element 310, therefore the differential amplification circuit OPI is used for amplification.

A gain A thereof is given by $R2/(R1+Rh)$. Here, Rh indicates the internal resistance of the Hall element 310.

In this case, the variation of Rh is large, and there is a temperature characteristic, therefore the variation of output of the Hall element 310 tends to become large, but since this is a differential amplification circuit, there are the advantages that the system is resistant to noise, and the number of parts is small.

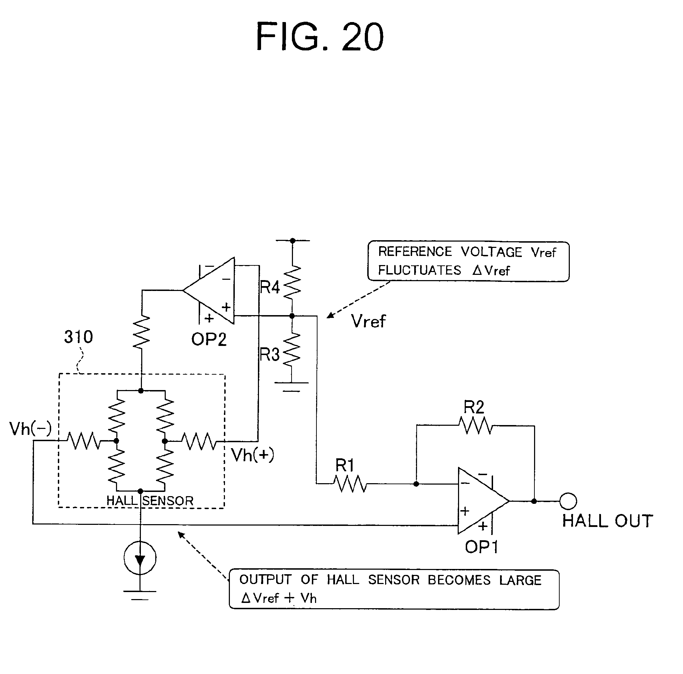

Further, the Hall element amplification circuit can employ the configuration as shown in FIG. 20.

This circuit is constituted so as to cancel the same phase voltage of the Hall element 310 at the differential amplification circuit OP2 and amplify the same at the non-inverted amplification circuit OPI.

The - output of the Hall element 310 is input to the inverted input (-) of the differential amplification circuit OP2 used as the first amplification circuit, and a reference voltage Vref is supplied to the non-inverted input (+). Further, the other output of the Hall element 310 is input to the non-inverted input (+) of the amplification circuit OPI, and the reference voltage Vref is supplied to the inverted input (-).

Here, where the amount of fluctuation of the reference voltage is ΔVref and the output of the Hall element is ΔVref+Vh (=Vh(+)-Vh(-)), the following relationship is satisfied.

$$\Delta Vref : (\Delta Vref + Vh) = R3//R4 : R3//R4 + R1$$

Accordingly, $(\Delta Vref+Vh)=(R3//R4/R1+1) \times Vh$

Namely, the output of the Hall element 310 becomes $(R3//R4/R1+1)$ times.

Further, the gain A is given by the following equation.

$$A = [1 + R2/(R1 + R3//R4)] \times (R3//R4/R1 + 1)$$

In this way, since the circuit of FIG. 20 is a non-inverted amplification circuit, it not affected by the internal resistance Rh of the Hall element 301. Accordingly, the temperature characteristic is good, and the variation of the output of the Hall element is small. By making the output of the Hall element 310 large, the system can be made resistant to noise.

In the present embodiment, the galvanometer 300 driving the aperture system 200 is connected to a not shown control circuit board, on which terminals of the Hall element 310, brake coil 311, and drive coil 312 are arranged at locations away from the aperture system 200, through a lead wire connected to the board 400, and tends to be easily affected by noise etc. in the lead wire portion, therefore, as a Hall element amplification circuit, the circuit of FIG. 20 is more suitable than the circuit of FIG. 19.

The aperture system 200 of the present embodiment dynamically changes the opening diameter of the aperture in accordance with the fluctuation of the APL (average picture level).

The control system on the projector side has three types of modes of setting the aperture, that is, ON/OFF/AUTO.

Variable control is performed so as to give optimum aperture opening at the fully opened state of the aperture, that is, the light blocking rate 0%, in the aperture OFF mode, the light blocking rate 50% in the aperture ON mode, and the light blocking rate 0 to 80% in the aperture AUTO mode.

Here, the method of control of the aperture opening ratio in the AUTO mode will be explained.

In a liquid crystal panel drive circuit, in order to convert the input signal format to the screen size, video signal timing, resolution, etc. corresponding to the output format, at least 1 frame's worth of the signal is stored once in the frame buffer, then output from the panel driver.

The microprocessor for the aperture system control fetches the APL information indicating the mean luminance level of the image data included in one frame before output and identifies the value thereof.

This is converted from a digital to analog format to a control signal for obtaining the optimum aperture opening based on the recognized APL information.

In synchronization with the image signal output to the liquid crystal panel, this control signal optimized by the APL information is applied to the aperture system drive circuit to obtain the optimum aperture opening.

The signal levels for driving the liquid crystal panels 122R, 122G, and 122B are controlled together with the opening of the aperture based on the APL information of the video signal.

For example, when a dark screen is input as the video signal, the light output is restricted by making the opening of aperture small, conversely the signal levels for driving the liquid crystal panels 122R, 122G, and 122B are made high, and the video of the predetermined color level is displayed.

By performing such control, the liquid crystal panels 122R, 122G, and 122B more widely utilize the dynamic range which can be displayed and can express excellent colors even in a dark video. Further, by making the opening small, the angles of the light beams striking the liquid crystal panels 122R, 122G, and 122B become small, the incident angle characteristic (viewing angle dependency) is enhanced, and the contrast ratio is improved.

The microprocessor for the aperture system control compares the fluctuation of the APL before and after frames and determines the difference thereof.

When the APL fluctuation between frames exceeds a previously set threshold value, the control signal is multiplied with a coefficient of 1 or more to drive the aperture system and thereby suppress abrupt change of the aperture opening.

The viewer, that is, the human eye, is insensitive to the absolute value of brightness in the case of an abrupt change of brightness. For example, in general, when suddenly moving from a dark place to a bright place, a time of about 40 seconds is required for the eye to get used to the brightness.

Based on such a characteristic of the eye, a coefficient that does not make the viewer uncomfortable is found, and parameters related to the aperture system drive are determined.

Next, measures for heat resistance of the aperture system 200 in the present embodiment will be explained.

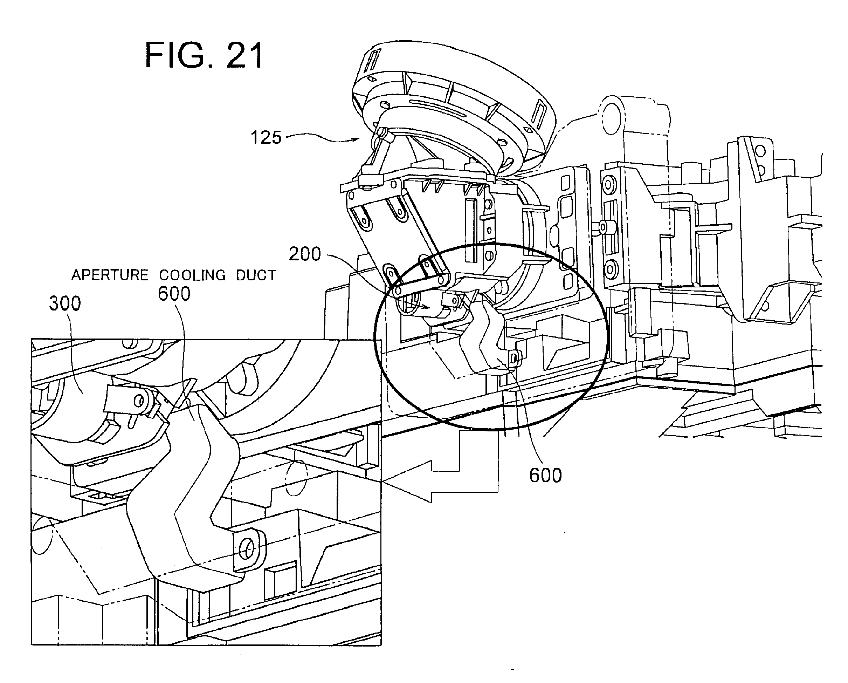

FIG. 21 is a diagram showing a cooling structure for the aperture system of the liquid crystal projector 100 according to the present embodiment.

In the liquid crystal projector 100, although not shown, as the cooling structure, provision is made of a sirocco fan designed especially for cooling the lamp ballast and aperture system, a sirocco fan designed especially for cooling the prism and aperture system, a blowing port for cooling the prism, etc.

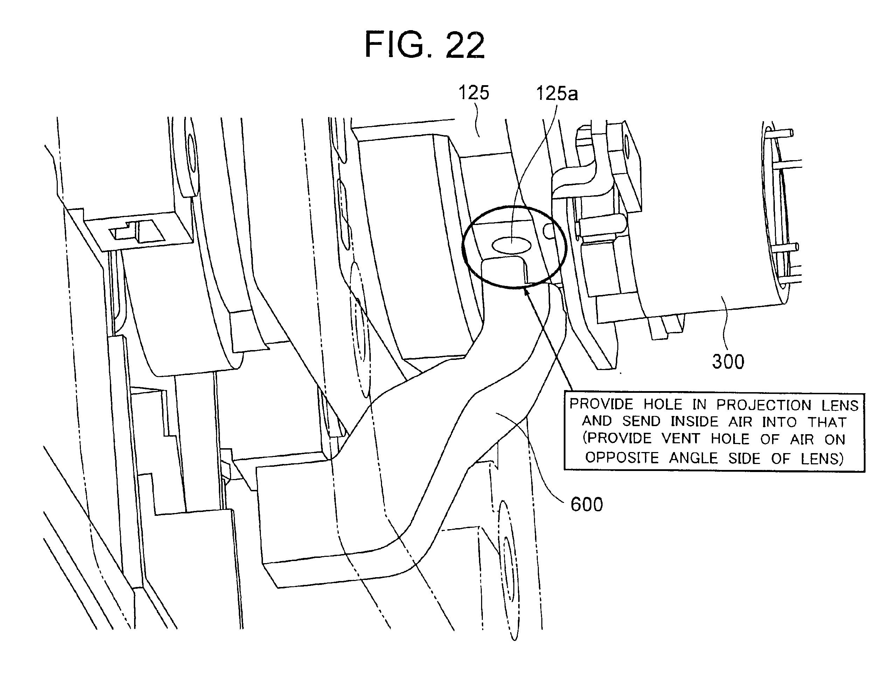

In the present embodiment, a portion of air of the prism cooling duct is led to an aperture cooling duct 600 through a hole of a main plate sealed by inner air and force cools the aperture blades 202 and 203 in the projection optical system 125. Specifically, as shown in FIG. 22, a hole 125a of the projection optical system 125 is formed, whereby inside air is sent through the duct 600. Note that a vent hole of air is formed also on an opposite angle side of the position of formation of the hole 125a.

In this way, in the present embodiment, for cooling the aperture of the projection optical system 125 side, air is led from the inside air circulation duct side through the aperture cooling duct.

Accordingly, the inside air is utilized, therefore the projection lens is not affected by dust.

Further, it is not necessary to provide a dedicated fan, therefore the cost can be reduced and the shape can be reduced in size.

Further, the air can be directed by pin point precision, and it becomes possible to obtain a large cooling effect with the minimum amount of air.

As explained above, according to the present embodiment, it becomes possible to realize a projection type display system able to suppress an increase of the outer size of the set etc., able to improve the contrast, and excellent in silence.

When the illumination aperture system 200 according to the present embodiment is disposed at a predetermined location, the polarization efficiency can be improved without changing the optical design of the conventional illumination optical system, therefore the contrast of the video projected onto the screen can be greatly improved.

The increase of the volume occupied by the projection optical system due to the provision of the present aperture system 200 occurs only near the location where the aperture system is attached, and a great improvement of performance can be achieved without detracting from the commercial value.

Further, the aperture system 200 has a structure force cooling the drive use actuator and has a structure force cooling the blades of the aperture system and its periphery, therefore malfunctions of portions such as the drive actuator due to the influence of high temperature heat can be prevented.

INDUSTRIAL APPLICABILITY

The projection type display system of the present invention can suppress an increase of the outer size of the set etc. and improve the contrast and is excellent in silence, therefore not only can it be applied as a projector, but it also can be applied to a rear projection type television etc.

**Claims**

1. A projection type display system comprising:

   a light modulating means for modulating incident illumination light based on input image information and emitting the result,
   an illumination optical system for making the illumination light from said light source strike said light modulating means, and
   a projection optical system for projecting the illumination light emitted from said light modulating means, wherein a variable opening aperture system is arranged in the vicinity of a pupil position of said projection optical system, and
   said aperture system is arranged so as to match the contrast characteristics of said light modulating means and the aperture shape at the time of opening/closing the aperture.

2. A projection type display system as set forth in claim 1, wherein said aperture system slides two aperture blades by a drive system to define an aperture region.

3. A projection type display system as set forth in claim 1, wherein at least the edges of said aperture blades forming said aperture region include curved parts.

4. A projection type display system as set forth in claim 3, wherein at least the edges of said aperture blades forming said aperture are formed to shapes having a predetermined curvature.

5. A projection type display system as set forth in claim 4, wherein the curved shapes of said two aperture blades are formed so as to form an elliptical shape at the time of the use of the aperture.

6. A projection type display system as set forth in claim 1, wherein said aperture system is formed so that it can be attached/detached to/from a lens barrel of said projection optical system.

7. A projection type display system as set forth in claim 1, wherein a route is formed for blowing circulated cooling air for the aperture system arranged in said projection optical system is formed.

8. A projection type display system as set forth in claim 1, wherein said aperture system has an actuator for driving an opening operation by an articulated link mechanism.

9. A projection type display system as set forth in claim 1, wherein

said actuator includes a galvanometer having a Hall element, and

said Hall element outputs from two terminal and has

a first differential amplification circuit for differentially amplifying a first output of said Hall element and a reference voltage and supplying the same as a Hall voltage to said Hall element and

a second differential amplification circuit for differentially amplifying a second output of said Hall element and said reference voltage and outputting the same.

**10.** A projection type display system as set forth in claim 1, wherein said illumination optical system has

a light source for emitting illumination light, and

a pair of a first multi-lens array and a second multi-lens array for making illumination light emitted from said light source uniform and arranged at a predetermined interval on an optical axis.

**11.** A projection type display system as set forth in claim 1, wherein said aperture system is formed so as to give a light blocking rate other than 100% even in a fully closed state.

**12.** A projection type display system as set forth in claim 1, wherein said aperture system includes a plurality of aperture blades and synchronously opens/closes the plurality of aperture blades.

**13.** A projection type display system as set forth in claim 1, which changes an aperture diameter of said variable opening aperture system and controls the amplitude of a video signal linked with an APL (average picture level) of the video signal.

**14.** A projection type display system comprising:

a liquid crystal panel for modulating incident illumination light based on input image information and emitting the result,

an illumination optical system for making the illumination light from said light source strike said light modulating means, and

a projection optical system for projecting the illumination light emitted from said light modulating means, wherein a variable opening aperture system is arranged in the vicinity of the pupil position of said projection optical system,

a desired high contrast area in a distribution of a light incident angle characteristic of said liquid crystal panel has an elliptical shape, a long axis of the ellipse lies in an oblique direction having a predetermined angle with respect to orthogonal axes of a two-dimensional distribution characteristic,

said aperture system has two aperture blades having shapes with predetermined curvatures, an aperture opening shape formed by facing edges of the two aperture blades is an elliptical aperture shape, and the aperture system is arranged so that the elliptical shape of the aperture matches with the elliptical shape of the high contrast area of said liquid crystal panel.

**Amended claims under Art. 19.1 PCT**

**1.** (Amended) A projection type display system comprising:

a light modulating means for modulating illumination light from a light source based on an input video signal and emitting the result,

an illumination optical system for making the illumination light from said light source strike said light modulating means, and

a projection optical system for projecting the illumination light emitted from said light modulating means, wherein said projection optical system comprises an aperture system including an aperture which can be changed in opening shape and a drive unit for driving said aperture provided on a single base member, and

said aperture system is attached to said projection optical system via said base member so as to match the contrast characteristics of said light modulating means and the aperture shape at the time of opening/closing the aperture.

**2.** (Amended) A projection type display system as set forth in claim 1, wherein said aperture system slides two aperture blades arranged near a pupil position of said projection optical system by said drive unit to form an aperture region.

**3.** (Amended) A projection type display system as set forth in claim 2, wherein at least the edges of said aperture blades forming said aperture region include curved parts.

4. A projection type display system as set forth in claim 3, wherein at least the edges of said aperture blades forming said aperture are formed to shapes having a predetermined curvature.

5. A projection type display system as set forth in claim 4, wherein the curved shapes of said two aperture blades are formed so as to form an elliptical shape at the time of the use of the aperture.

6. A projection type display system as set forth in claim 1, wherein said aperture system is formed so that it can be attached/detached to/from a lens barrel of said projection optical system.

7. (Amended) A projection type display system as set forth in claim 1, wherein a route is formed for blowing circulated cooling air for the aperture system arranged in said projection optical system is formed.

8. (Amended) A projection type display system as set forth in claim 1, wherein said aperture system has as a drive unit an actuator for driving an opening/closing operation of said aperture by an articulated link mechanism.

9. (Amended) A projection type display device as set forth in claim 8, wherein
said actuator includes a galvanometer having a Hall element, and
said Hall element outputs from two terminal and has
a first differential amplification circuit for differentially amplifying a first output of said Hall element and a reference voltage and supplying the same as a Hall voltage to said Hall element and
a second differential amplification circuit for differentially amplifying a second output of said Hall element and said reference voltage and outputting the same.

10. (Amended) A projection type display system as set forth in claim 1, wherein said illumination optical system has a pair of a first multi-lens array and a second multi-lens array for making light emitted from said light source emitting illumination light uniform and arranged at a predetermined interval on an optical axis.

11. A projection type display system as set forth in claim 1, wherein said aperture system is formed so as to give a light blocking rate other than 100% even in a fully closed state.

12. A projection type display system as set forth in claim 1, wherein said aperture system includes a plurality of aperture blades and synchronously opens/closes the plurality of aperture blades.

13. (Amended) A projection type display system as set forth in claim 1, further comprising a control unit which changes an opening of an aperture of said aperture system and controls the amplitude of said video signal linked with an APL (average picture level) of said video signal.

14. (Amended) A projection type display system having
a liquid crystal panel for modulating illumination light from a light source based on input video information and emitting the result,
an illumination optical system for making the illumination light from said light source strike said light modulating means, and
a projection optical system for projecting the illumination light emitted from said light modulating means, wherein said projection optical system comprises an aperture system having an aperture able to be changed in opening shape, a desired high contrast area in a distribution of a light incident angle characteristic of said liquid crystal panel has an elliptical shape, a long axis of the ellipse lies in an oblique direction having a predetermined angle with respect to orthogonal axes of a two-dimensional distribution characteristic, and
said aperture system has two aperture blades having shapes with predetermined curvatures, an aperture opening shape formed by facing edges of the two aperture blades is an elliptical aperture shape, and the aperture system is arranged so that the elliptical shape of the aperture matches with the elliptical shape of the high contrast area of said liquid crystal panel.

15. (Added) A projection type display system as set forth in claim 1, wherein
said drive unit of said aperture system is configured by an actuator including a galvanometer.

16. (Added) A projection type display system as set forth in claim 13, wherein said control unit controls said drive unit to reduce an opening of the aperture of said aperture system by its drive operation and thereby increase the amplitude of the video signal when the APL (average picture level) of said video signal falls.

**17.** (Added) A projection type display system as set forth in claim 13, wherein said drive unit of said aperture system comprises an actuator including a galvanometer.

FIG. 1

# FIG. 2

EP 1 895 361 A1

# FIG. 3

EP 1 895 361 A1

# FIG. 4

RELEASE (NO POWER)

# FIG. 5

APERTURE

# FIG. 6A

# FIG. 6B

# FIG. 7A
## APERTURE BLADE BASIC SHAPE

202a(203a)

R

90°

# FIG. 7B
## SMALL APERTURE OPENING SHAPE

203a        202a

# FIG. 7C
## OPEN OPENING SHAPE

(2011)

ACCORDING TO COMBINATION OF TWO BASIC SHAPES

EP 1 895 361 A1

# FIG. 8A    FIG. 8B    FIG. 8C

2.5 CYCLES

3.5 CYCLES

4.5 CYCLES

TYPE1

TYPE2

TYPE3

EP 1 895 361 A1

# FIG. 9

# FIG. 10A

DISTRIBUTION OF ANGLE OF
LIGHT ILLUMINATING PANEL

Unit lx
Num 12
x1.0A

120
110
100
90
80
70
60
50
40
30
20
10

CRC
THIS CIRCLE IS APERTURE DIAMETER = CONTROL FUNCTION OF RAY ANGLE

→ CONTRAST IS DETERMINED

# FIG. 10B

DEPENDENCY OF PANEL CONTRAST ON
ANGLE OF ILLUMINATION LIGHT

CNTR

-400
-375
-350
-325
-300
-275
-250
-225
-200
-175
-150
-125
-100
-75
-50
-25
-0

CONTRAST
RATIO

EP 1 895 361 A1

FIG. 11A

FIG. 11B

FIG. 11C

# FIG. 12

DEPENDENCY OF PANEL CONTRAST ON
ANGLE OF ILLUMINATION LIGHT

# FIG. 13

| BRIGHTNESS LOW ← | RAY ANGLE SMALL | → CONTRAST HIGH |
|---|---|---|
| BRIGHTNESS HIGH ← | RAY ANGLE LARGE | → CONTRAST LOW |

# FIG. 14

# FIG. 15

# FIG. 16A
VERTUAL TYPE

# FIG. 16B
OBLIQUE TYPE

# FIG. 16C
LATERAL TYPE

# FIG. 17

| APERTURE RATIO | VERTICAL TYPE | OBLIQUE TYPE | LATERAL TYPE |
|---|---|---|---|
| 50% | 1. 46 | 1. 50 | 1. 31 |
| 40% | 1. 51 | 1. 60 | 1. 42 |
| 30% | 1. 89 | 1. 80 | 1. 75 |
| 25% | 1. 93 | 1. 99 | 1. 97 |
| MEAN | 1. 70 | 1. 72 | 1. 61 |

# FIG. 18

# FIG. 19

# FIG. 20

REFERENCE VOLTAGE Vref
FLUCTUATES △Vref

Vref

R4

R3

OP2

310

HALL SENSOR

Vh(−)

Vh(+)

R1

R2

OP1

HALL OUT

OUTPUT OF HALL SENSOR BECOMES LARGE
△Vref + Vh

# FIG. 21

125

200

APERTURE COOLING DUCT
300        600

600

EP 1 895 361 A1

# FIG. 22

125   125a

125

125a

300

PROVIDE HOLE IN PROJECTION LENS
AND SEND INSIDE AIR INTO THAT
(PROVIDE VENT HOLE OF AIR ON
OPPOSITE ANGLE SIDE OF LENS)

600

EP 1 895 361 A1

<table>
<tr><td align="center"><b>INTERNATIONAL SEARCH REPORT</b></td><td colspan="2">International application No.<br>PCT/JP2006/312356</td></tr>
</table>

**A. CLASSIFICATION OF SUBJECT MATTER**
*G03B21/14* (2006.01) i

According to International Patent Classification (IPC) or to both national classification and IPC

**B. FIELDS SEARCHED**

Minimum documentation searched (classification system followed by classification symbols)
G03B21/00-21/30

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2003-302618 A (Canon Inc.),<br>24 October, 2003 (24.10.03),<br>Full text; all drawings<br>& US 2003/0193650 A1 | 1,2,10,12<br>3-8,11,13,14<br>9 |
| Y<br>A | JP 2004-157346 A (Chinon Tekku Kabushiki<br>Kaisha),<br>03 June, 2004 (03.06.04),<br>Full text; all drawings<br>(Family: none) | 3-8,11,13,14<br>9 |
| Y<br>A | JP 4-249233 A (Pioneer Electronic Corp.),<br>04 September, 1992 (04.09.92),<br>Full text; all drawings<br>(Family: none) | 3-8,11,13,14<br>9 |

| [X] Further documents are listed in the continuation of Box C. | [ ] See patent family annex. |
|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>06 September, 2006 (06.09.06) | Date of mailing of the international search report<br>19 September, 2006 (19.09.06) |
|---|---|
| Name and mailing address of the ISA/<br>Japanese Patent Office | Authorized officer |
| Facsimile No. | Telephone No. |

Form PCT/ISA/210 (second sheet) (April 2005)

## INTERNATIONAL SEARCH REPORT

| International application No. |
| --- |
| PCT/JP2006/312356 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y<br>A | US 2004/57025 A1 (TEXAS INSTRUMENTS INC.),<br>25 March, 2004 (25.03.04),<br>Full text; all drawings<br>(Family: none) | 3-8,11,13,14<br>9 |
| Y<br>A | JP 2003-107396 A (Fuji Photo Optical Co.,<br>Ltd.),<br>09 April, 2003 (09.04.03),<br>Full text; all drawings<br>& US 2003/63264 A1　　& DE 10244886 A1<br>& CN 1410830 A | 3-8,14<br>9 |
| Y<br><br>A | JP 2005-003744 A (Fuji Photo Optical Co.,<br>Ltd.),<br>06 January, 2005 (06.01.05),<br>Par. No. [0025]; all drawings<br>& US 2005/1997 A1 | 3-6,8,11,13,<br>14<br>9 |
| Y | JP 11-202405 A (Sony Corp.),<br>30 July, 1999 (30.07.99),<br>Par. Nos. [0015], [0016]; Fig. 1<br>(Family: none) | 6 |
| Y | JP 7-306377 A (Canon Inc.),<br>21 November, 1995 (21.11.95),<br>Full text; all drawings<br>& US 5764407 A | 14 |
| A | JP 4-83113 A (Canon Inc.),<br>17 March, 1992 (17.03.92),<br>Page 3, upper left column, lines 16 to 20;<br>all drawings<br>(Family: none) | 9 |

Form PCT/ISA/210 (continuation of second sheet) (April 2005)

**EP 1 895 361 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8106090 A